(19) Europäisches Patentamt
European Patent Office
Office européen des brevets

(11) EP 4 109 374 A1

(12) EUROPEAN PATENT APPLICATION
published in accordance with Art. 153(4) EPC

(43) Date of publication:
28.12.2022 Bulletin 2022/52

(51) International Patent Classification (IPC):
G06Q 30/02 (2012.01)

(21) Application number: 21771304.9

(22) Date of filing: 23.02.2021

(52) Cooperative Patent Classification (CPC):
G06F 16/9535; G06K 9/62; G06Q 30/02;
Y02D 10/00

(86) International application number:
PCT/CN2021/077375

(87) International publication number:
WO 2021/185028 (23.09.2021 Gazette 2021/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.03.2020 CN 202010202053

(71) Applicant: Huawei Technologies Co., Ltd.
Longgang
Shenzhen, Guangdong 518129 (CN)

(72) Inventors:
• LI, Guilin
Shenzhen, Guangdong 518129 (CN)

• LIU, Bin
Shenzhen, Guangdong 518129 (CN)
• TANG, Ruiming
Shenzhen, Guangdong 518129 (CN)
• HE, Xiuqiang
Shenzhen, Guangdong 518129 (CN)
• LI, Zhenguo
Shenzhen, Guangdong 518129 (CN)
• ZHANG, Weinan
Shanghai 200240 (CN)

(74) Representative: Isarpatent
Patent- und Rechtsanwälte Barth
Charles Hassa Peckmann & Partner mbB
Friedrichstrasse 31
80801 München (DE)

(54) **DATA PROCESSING METHOD AND DEVICE**

(57) This application provides a data processing method and an apparatus. This application relates to the field of artificial intelligence, and specifically, to the field of computer vision. The method includes: adding an architecture parameter to each feature interaction item in a first model, to obtain a second model, where the first model is an FM-based model, and the architecture parameter represents importance of a corresponding feature interaction item; performing optimization on architecture parameters in the second model, to obtain the optimized architecture parameters; obtaining, based on the optimized architecture parameters and the first model or the second model, a third model through feature interaction item deletion. Feature interaction item selection can be performed through optimization on the architecture parameters, and training for a plurality of candidate subsets in a conventional technology is not required. Therefore, this can effectively reduce a computing workload of feature interaction selection to save computing power, and improve efficiency of feature interaction selection.

300

S310: Add an architecture parameter to each feature interaction item in a first model, to obtain a second model, where the first model is an FM-based model

S320: Perform optimization on the architecture parameters in the second model, to obtain the optimized architecture parameters

S330: Obtain, based on the optimized architecture parameters and the first model or the second model, a third model through feature interaction item deletion

S340: Train the third model

FIG. 3

**Description**

This application claims priority to Chinese Patent Application No. 202010202053.7, filed with the China National Intellectual Property Administration on March 20, 2020 and entitled "DATA PROCESSING METHOD AND APPARATUS", which is incorporated herein by reference in its entirety.

**TECHNICAL FIELD**

This application relates to the field of artificial intelligence, and specifically, to a data processing method and an apparatus.

**BACKGROUND**

With rapid development of Internet technologies, an information overload (information overload) problem occurs. To resolve the information overload problem, a recommender system (recommender system, RS) emerges. Click-through rate (click-through rate, CTR) prediction is an important step in the recommender system. Whether to recommend a commodity needs to be determined based on a predicted CTR. In addition to a single feature, a feature interaction also needs to be considered during CTR prediction. To represent the feature interaction, a factorization machine (factorization machine, FM) model is proposed. The FM model includes a feature interaction item of all interactions of single features. In a conventional technology, a CTR prediction model is usually built based on an FM.
A quantity of feature interaction items in the FM model increases exponentially with an order of a feature interaction. Therefore, with an increasingly higher order, the feature interaction items become numerous. As a result, there is an extremely large computing workload in FM model training. To resolve this problem, feature interaction selection (feature interaction selection, FIS) is proposed. Manual feature interaction selection is time-consuming and labor-intensive. Therefore, automatic feature interaction selection (automatic feature interaction selection, AutoFIS) is proposed in the industry.
In an existing automatic feature interaction selection solution, search space formed by all possible feature interaction subsets is searched for an optimal subset, to implement feature interaction selection. A search process consumes high energy and consumes a large amount of computing power.

**SUMMARY**

This application provides a data processing method and an apparatus, to reduce a computing workload and computing power consumption of feature interaction selection.
According to a first aspect, a data processing method is provided. The method includes: adding architecture parameters to each feature interaction item in a first model, to obtain a second model, where the first model is an FM-based model, and the architecture parameters represent importance of a corresponding feature interaction item; performing optimization on the architecture parameters in the second model, to obtain the optimized architecture parameters; obtaining, based on the optimized architecture parameters and the first model or the second model, a third model through feature interaction item deletion.
The FM-based model represents a model built based on the FM principle, for example, includes any one of the following models: an FM model, a DeepFM model, an IPNN model, an AFM model, and an NFM model.
The third model may be a model obtained through feature interaction item deletion based on the first model.
Alternatively, the third model may be a model obtained through feature interaction item deletion based on the second model.
A feature interaction item to be deleted or retained (in other words, selected) may be determined in a plurality of manners.
Optionally, in an implementation, a feature interaction item corresponding to an architecture parameter whose value is less than a threshold in the optimized architecture parameters may be deleted.
The threshold represents a criterion for determining whether to retain a feature interaction item. For example, if a value of an optimized architecture parameter of a feature interaction item is less than the threshold, it indicates that the feature interaction item is to be deleted. If a value of an optimized architecture parameter of a feature interaction item reaches the threshold, it indicates that the feature interaction item is to be retained (in other words, selected).
The threshold may be determined based on an actual application requirement. For example, a value of the threshold may be obtained through model training. A manner of obtaining the threshold is not limited in this application.
Optionally, in another implementation, if values of some architecture parameters change to zero after optimization is completed, feature interaction items corresponding to the optimized architecture parameters whose values are not zero may be directly used as a retained feature interaction item, to obtain the third model.

Optionally, in still another implementation, if values of some architecture parameters change to zero after optimization is completed, a feature interaction item corresponding to an architecture parameter whose value is less than the threshold may be further deleted from feature interaction items corresponding to the optimized architecture parameters whose values are not zero, to obtain the third model.

In an existing automatic feature interaction selection solution, all possible feature interaction subsets are used as search space (search space), and a best candidate subset is selected from n randomly selected candidate subsets by using a discrete algorithm as a selected feature interaction. When each candidate subset is evaluated, training needs to be performed once, resulting in a large computing workload and high computing power consumption.

In this application, the architecture parameters are introduced into the FM-based model, so that feature interaction item selection can be implemented through optimization on the architecture parameters. That is, in this application, provided that optimization on the architecture parameters is performed once, feature interaction item selection can be implemented, and training for a plurality of candidate subsets in a conventional technology is not required. Therefore, this can effectively reduce a computing workload of feature interaction selection to save computing power, and improve efficiency of feature interaction selection.

In addition, an existing automatic feature interaction selection solution cannot be applied to a deep learning model with a long training period, because of the large computing workload and high computing power consumption.

In this application, feature interaction selection can be implemented through an optimization process of the architecture parameters. Alternatively, feature interaction item selection can be completed through one end-to-end model training process, so that a period for feature interaction item selection (or search) may be equivalent to a period for one model training. Therefore, feature interaction selection can be applied to a deep learning model with a long training period.

In the FM model in the conventional technology, because all feature interactions need to be enumerated, it is difficult to extend to a higher order.

In this application, the architecture parameters are introduced into the FM-based model, so that feature interaction selection can be implemented through optimization on the architecture parameters. Therefore, in the solution of this application, the feature interaction item in the FM-based model can be extended to a higher order.

Optimization may be performed on the architecture parameters in the second model by using a plurality of optimization algorithms (or optimizers).

With reference to the first aspect, in a possible implementation of the first aspect, optimization allows the optimized architecture parameters to be sparse.

In this application, optimization on the architecture parameters allows the architecture parameters to be sparse, facilitating subsequent feature interaction item deletion.

Optionally, in an implementation in which optimization allows the optimized architecture parameters to be sparse, the obtaining, based on the optimized architecture parameters and the first model or the second model, a third model through feature interaction item deletion includes: obtaining, based on the first model or the second model, the third model after deleting a feature interaction item corresponding to an architecture parameter whose value is less than a threshold in the optimized architecture parameters.

In an implementation, in the first model, the third model is obtained after deleting a feature interaction item corresponding to an architecture parameter whose value is less than a threshold in the optimized architecture parameters.

In another implementation, in the second model, the third model is obtained after deleting a feature interaction item corresponding to an architecture parameter whose value is less than a threshold in the optimized architecture parameters.

It should be understood that the third model is obtained through feature interaction item deletion based on the second model, so that the third model has the optimized architecture parameters that represent importance of the feature interaction item. Subsequently, importance of the feature interaction item can be further learned through training of the third model.

With reference to the first aspect, in a possible implementation of the first aspect, optimization allows a value of at least one architecture parameter of the feature interaction item to be equal to zero after optimization is completed.

It is assumed that a feature interaction item corresponding to an architecture parameter whose value is zero after optimization is completed is considered as an unimportant feature interaction item. That optimization allows a value of at least one architecture parameter of the feature interaction item to be equal to zero after optimization is completed may be considered as allowing values of architecture parameters of an unimportant feature interaction item to be equal to zero after optimization is completed.

Optionally, optimization optimizes the architecture parameters in the second model using a gRDA optimizer, where the gRDA optimizer allows the value of at least one architecture parameter of the feature interaction item to tend to zero during an optimization process.

In embodiments of this application, optimization on the architecture parameters allows some architecture parameters to tend to zero, which is equivalent to removing some unimportant feature interaction items in an architecture parameter optimization process. In other words, optimization on the architecture parameters implements architecture parameter optimization and feature interaction item selection. This can improve efficiency of feature interaction selection and reduce a computing workload and computing power consumption.

In addition, in the architecture parameter optimization process, removing some unimportant feature interaction items can prevent noise generated by these unimportant feature interaction items. In this case, a model gradually evolves into an ideal model in the architecture parameter optimization process. In addition, prediction of other parameters (for example, architecture parameters and model parameters of an unremoved feature interaction item) in the model can be more accurate.

Optionally, in an implementation in which optimization allows the optimized architecture parameters to be sparse and allows a value of at least one architecture parameter of the feature interaction item to be equal to zero after optimization is completed, the obtaining, based on the optimized architecture parameters and the first model or the second model, a third model through feature interaction item deletion includes: obtaining the third model by deleting a feature interaction item other than a feature interaction item corresponding to the optimized architecture parameters.

Optionally, in the first model, the third model is obtained by deleting the feature interaction item other than the feature interaction item corresponding to the optimized architecture parameters. In other words, the third model is obtained through feature interaction item deletion based on the first model.

Optionally, the second model obtained through architecture parameter optimization is used as the third model. In other words, the third model is obtained through feature interaction item deletion based on the second model.

It should be understood that the third model is obtained through feature interaction item deletion based on the second model, so that the third model has the optimized architecture parameters that represent importance of the feature interaction item. Subsequently, importance of the feature interaction item can be further learned through training of the third model.

Optionally, in an implementation in which optimization allows the optimized architecture parameters to be sparse and allows a value of at least one architecture parameter of the feature interaction item to be equal to zero after optimization is completed, the obtaining, based on the optimized architecture parameters and the first model or the second model, a third model through feature interaction item deletion includes: obtaining the third model by deleting a feature interaction item other than a feature interaction item corresponding to the optimized architecture parameters and deleting the feature interaction item corresponding to the architecture parameter whose value is less than the threshold in the optimized architecture parameters.

Optionally, in the first model, the third model is obtained by deleting the feature interaction item other than the feature interaction item corresponding to the optimized architecture parameters and deleting the feature interaction item corresponding to the architecture parameter whose value is less than the threshold in the optimized architecture parameters.

Optionally, in the second model obtained through architecture parameter optimization, the third model is obtained after deleting a feature interaction item corresponding to an architecture parameter whose value is less than a threshold in the optimized architecture parameters.

It should be understood that the third model is obtained through feature interaction item deletion based on the second model, so that the third model has the optimized architecture parameters that represent importance of the feature interaction item. Subsequently, importance of the feature interaction item can be further learned through training of the third model.

With reference to the first aspect, in a possible implementation of the first aspect, the method further includes: performing optimization on model parameters in the second model, where optimization includes scalarization processing on the model parameters in the second model.

The model parameters indicate weight parameters other than the architecture parameters of the feature interaction item in the second model. In other words, the model parameters represent an original parameter in the first model.

In an implementation, optimization includes performing batch normalization (batch normalization, BN) processing on the model parameters in the second model.

It should be understood that scalarization processing is performed on the model parameters of the feature interaction item, to decouple the model parameters from the architecture parameters of the feature interaction item. In this case, the architecture parameters can more accurately reflect importance of the feature interaction items, further improving optimization accuracy of the architecture parameters.

With reference to the first aspect, in a possible implementation of the first aspect, the performing optimization on the architecture parameters in the second model and the performing optimization on the model parameters in the second model include: performing simultaneous optimization on both the architecture parameters and the model parameters in the second model by using same training data, to obtain the optimized architecture parameters.

In other words, in each round of training in an optimization process, simultaneous optimization is performed on both the architecture parameters and the model parameters based on a same batch of training data.

Alternatively, the architecture parameters and the model parameters in the second model are considered as decision variables at a same level, and simultaneous optimization is performed on both the architecture parameters and the model parameters in the second model, to obtain the optimized architecture parameters.

In this application, one-level optimization processing is performed on the architecture parameters and the model parameters in the second model, to implement optimization on the architecture parameters in the second model, so that simultaneous optimization can be performed on the architecture parameters and the model parameters. Therefore, time consumed in an optimization process of the architecture parameters in the second model can be reduced, to further help improve efficiency of feature interaction item selection.

With reference to the first aspect, in a possible implementation of the first aspect, the method further includes: training the third model to obtain a click-through rate CTR prediction model or a conversion rate CVR prediction model.

According to a second aspect, a data processing method is provided. The method includes: inputting data of a target object into a click-through rate CTR prediction model or a conversion rate CVR prediction model, to obtain a prediction result of the target object; and determining a recommendation status of the target object based on the prediction result of the target object.

The CTR prediction model or the CVR prediction model is obtained through the method in the first aspect.

Training of a third model includes the following step: train the third model by using a training sample of the target object, to obtain the CTR prediction model or the CVR prediction model.

Optionally, optimization on architecture parameters includes the following step: perform simultaneous optimization on both the architecture parameters and model parameters in a second model by using the same training data as the training sample of the target object, to obtain the optimized architecture parameters.

According to a third aspect, a data processing apparatus is provided. The apparatus includes the following units.

A first processing unit is configured to add architecture parameters to each feature interaction item in a first model, to obtain a second model, where the first model is a factorization machine FM-based model, and the architecture parameters represent importance of a corresponding feature interaction item.

A second processing unit is configured to perform optimization on the architecture parameters in the second model, to obtain the optimized architecture parameters.

A third processing unit is configured to obtain, based on the optimized architecture parameters and the first model or the second model, a third model through feature interaction item deletion.

With reference to the third aspect, in a possible implementation of the third aspect, the second processing unit performs optimization on the architecture parameters, to allow the optimized architecture parameters to be sparse.

With reference to the third aspect, in a possible implementation of the third aspect, the third processing unit is configured to obtain, based on the first model or the second model, the third model after deleting a feature interaction item corresponding to an architecture parameter whose value is less than a threshold in the optimized architecture parameters.

With reference to the third aspect, in a possible implementation of the third aspect, the second processing unit performs optimization on the architecture parameters, to allow a value of at least one architecture parameter of the feature interaction item to be equal to zero after optimization is completed.

With reference to the third aspect, in a possible implementation of the third aspect, the third processing unit is configured to optimize the architecture parameters in the second model using a generalized regularized dual averaging gRDA optimizer, where the gRDA optimizer allows the value of at least one architecture parameter of the feature interaction item to tend to zero during an optimization process.

With reference to the third aspect, in a possible implementation of the third aspect, the second processing unit is further configured to perform optimization on model parameters in the second model, where optimization includes scalarization processing on the model parameters in the second model.

With reference to the third aspect, in a possible implementation of the third aspect, the second processing unit is configured to perform batch normalization BN processing on the model parameters in the second model.

With reference to the third aspect, in a possible implementation of the third aspect, the second processing unit is configured to perform simultaneous optimization on both the architecture parameters and model parameters in a second model by using same training data, to obtain the optimized architecture parameters.

With reference to the third aspect, in a possible implementation of the third aspect, the apparatus further includes: a training unit, configured to train the third model, to obtain a CTR prediction model or a CVR prediction model.

According to a fourth aspect, a data processing apparatus is provided. The apparatus includes the following units.

A first processing unit is configured to input data of a target object into a click-through rate CTR prediction model or a conversion rate CVR prediction model, to obtain a prediction result of the target object.

A first processing unit is configured to determine a recommendation status of the target object based on the prediction result of the target object.

The CTR prediction model or the CVR prediction model is obtained through the method in the first aspect.

Training of a third model includes the following step: train the third model by using a training sample of the target object, to obtain the CTR prediction model or the CVR prediction model.

Optionally, optimization on architecture parameters includes the following step: perform simultaneous optimization on both the architecture parameters and model parameters in a second model by using the same training data as the training sample of the target object, to obtain the optimized architecture parameters.

According to a fifth aspect, an image processing apparatus is provided. The apparatus includes: a memory, configured to store a program; and a processor, configured to execute the program stored in the memory, where when the program stored in the memory is being executed, the processor is configured to perform the method in the first aspect or the second aspect.

According to a sixth aspect, a computer-readable medium is provided. The computer-readable medium stores program code to be executed by a device, and the program code is used to perform the method in the first aspect or the second aspect.

According to a seventh aspect, a computer program product including instructions is provided. When the computer program product runs on a computer, the computer is enabled to perform the method in the first aspect or the second aspect.

According to an eighth aspect, a chip is provided. The chip includes a processor and a data interface. The processor reads, through the data interface, instructions stored in a memory, to perform the method in the first aspect or the second aspect.

Optionally, in an implementation, the chip may further include a storage and the storage stores instructions; the processor is configured to execute the instructions stored in the storage, and when the instructions are executed, the processor is configured to perform the methods in the first aspect or the second aspect.

According to a ninth aspect, an electronic device is provided. The electronic device includes the apparatus provided in the third aspect, the fourth aspect, the fifth aspect, or the sixth aspect.

It can be learned from the foregoing description that, in this application, the architecture parameters are introduced into the FM-based model, so that feature interaction item selection can be implemented through optimization on the architecture parameters. That is, in this application, feature interaction item selection can be implemented through optimization on the architecture parameters, and training for a plurality of candidate subsets in the conventional technology is not required. Therefore, this can effectively reduce a computing workload of feature interaction selection to save computing power, and improve efficiency of feature interaction selection.

In addition, in the solution provided in this application, the feature interaction item in the FM-based model can be extended to a higher order.

## BRIEF DESCRIPTION OF DRAWINGS

FIG. 1 is a schematic diagram of an FM model architecture;
FIG. 2 is a schematic diagram of FM model training;
FIG. 3 is a schematic flowchart of a data processing method according to an embodiment of this application;
FIG. 4 is a schematic diagram of an FM model architecture according to an embodiment of this application;
FIG. 5 is another schematic flowchart of a data processing method according to an embodiment of this application;
FIG. 6 is still another schematic flowchart of a data processing method according to an embodiment of this application;
FIG. 7 is a schematic block diagram of a data processing apparatus according to an embodiment of this application;
FIG. 8 is another schematic block diagram of a data processing apparatus according to an embodiment of this application;
FIG. 9 is still another schematic block diagram of a data processing apparatus according to an embodiment of this application; and
FIG. 10 is a schematic diagram of a hardware architecture of a chip according to an embodiment of this application.

## DESCRIPTION OF EMBODIMENTS

The following describes technical solutions of this application with reference to accompanying drawings.

With rapid development of current technologies, there is an increasing amount of data. To solve an information overload (information overload) problem, a recommender system (recommender system, RS) is proposed. The recommender system sends historical behavior, interests, preferences, or demographic features of a user to a recommendation algorithm, and then uses the recommendation algorithm to generate a list of items that the user may be interested in.

In the recommender system, click-through rate (click-through rate, CTR) prediction (or further including conversion rate (conversion rate, CVR) prediction) is a very important step. Whether to recommend a commodity needs to be determined based on a predicted click-through rate. In addition to a single feature, a feature interaction also needs to be considered during CTR prediction. The feature interaction is very important for recommendation sorting. A factorization machine (factorization machine, FM) can reflect the feature interaction. The factorization machine may be referred to as an FM model for short.

Based on a maximum order of the feature interaction item, the FM model may be referred to as a *-order FM model. For example, an FM model whose feature interaction item has a maximum two orders may be referred to as a second-order FM model, and an FM model whose feature interaction item has a maximum three orders may be referred to as a third-order FM model.

An order of the feature interaction item indicates a specific quantity of features of an interaction item that is corresponding to the feature interaction item. For example, an interaction item of two features may be referred to as a second-order feature interaction item, and an interaction item of three features may be referred to as a third-order feature interaction item.

In an example, the second-order FM model is shown in the following formula (1):

$$\hat{y}(\mathbf{x}) := w_0 + \sum_{i=1}^{m} w_i x_i + \sum_{i=1}^{m} \sum_{j=i+1}^{m} \langle \mathbf{v}_i, \mathbf{v}_j \rangle x_i x_j$$

$$\langle \mathbf{v}_i, \mathbf{v}_j \rangle := \sum_{f=1}^{k} v_{i,f} \cdot v_{j,f} \tag{1}$$

x indicates a feature vector, $x_i$ indicates an ith feature, and $x_j$ indicates a jth feature, m indicates a feature dimension, and may also be referred to as a feature field (field). $W_0$ indicates a global offset, and $W_0 \in R$. $w_i$ indicates strength of the ith feature, and $\mathbf{W} \in R^m$. $\mathbf{v}_i$ indicates an auxiliary vector of the ith feature $x_i$. $\mathbf{v}_j$ indicates an auxiliary vector of the jth feature $x_j$. k is dimension of $\mathbf{v}_i$ and $\mathbf{v}_j$. A two-dimensional matrix is $\mathbf{V} \in R^{m \times k}$.

$x_i x_j$ indicates a combination of the ith feature $x_i$ and the jth feature $X_j$.

$\langle \mathbf{v}_i, \mathbf{v}_j \rangle$ indicates an inner product of $\mathbf{v}_i$ and $\mathbf{v}_j$, and indicates interaction between the ith feature $X_i$ and the jth feature $x_j$. $\langle \mathbf{v}_i, \mathbf{v}_j \rangle$ may also be understood as a weight parameter of a feature interaction item $x_i x_j$ for example, $\langle \mathbf{v}_i, \mathbf{v}_j \rangle$ may be denoted as $W_{ij}$.

In this specification, $\langle \mathbf{v}_i, \mathbf{v}_j \rangle$ is denoted as a weight parameter of a feature interaction item $x_i x_j$.

Optionally, the formula (1) may also be expressed as the following formula (2):

$$l_{fm} = \langle w, x \rangle + \sum_{i=1}^{m} \sum_{j>i}^{m} \langle e_i, e_j \rangle \tag{2}$$

In the formula (2), $\langle e_i, e_j \rangle$ indicates $\langle \mathbf{v}_i, \mathbf{v}_j \rangle x_i x_j$ in the formula (1), and $\langle w, x \rangle$ indicates $w_0 + \sum_{i=1}^{m} w_i x_i$ in the formula (1).

In another example, the third-order FM model is shown in the following formula (3):

$$l_{fm}^{3rd} = \langle w, x \rangle + \sum_{i=1}^{m} \sum_{j>i}^{m} \langle e_i, e_j \rangle + \sum_{i=1}^{m} \sum_{j>i}^{m} \sum_{t>j}^{m} \langle e_i, e_j, e_t \rangle \tag{3}$$

The FM model includes a feature interaction item of all interactions of single features. For example, a second-order FM model shown in the formula (1) or the formula (2) includes a feature interaction item of all two-order feature interactions of single features. For another example, the third-order FM model shown in the formula (3) includes a feature interaction item of all two-order feature interactions of single features and a feature interaction item of all three-order feature interactions of single features.

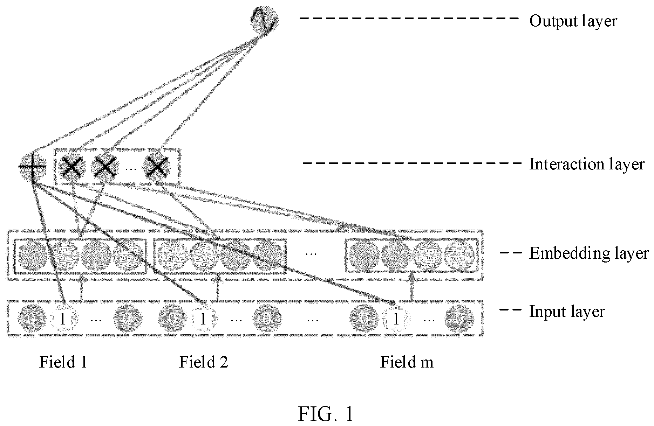

For example, in the industry, an operation of obtaining an auxiliary vector $\mathbf{v}_i$ of a feature $x_i$ is referred to as embedding (embedding), and an operation of building a feature interaction item based on the feature $x_i$ and the auxiliary vector $\mathbf{v}_i$ thereof is referred to as interaction (interaction). FIG. 1 is a schematic diagram of an FM model architecture. As shown in FIG. 1, an FM model may be considered as a neural network model, and includes an input (input) layer, an embedding (embedding) layer, an interaction (interaction) layer, and an output (output) layer. The input layer is used to generate a feature. Afield 1, a field, ..., and a field m indicate feature dimensions. The embedding layer is used to generate an auxiliary vector of the feature. The interaction layer is used to generate a feature interaction item based on the feature and the auxiliary vector of the feature. The output layer is used to output the FM model.

In a conventional technology, CTR prediction or CVR prediction is usually based on an FM.

In a current technology, an FM-based model includes an FM model, a DeepFM model, an IPNN model, an AFM model, an NFM model, and the like.

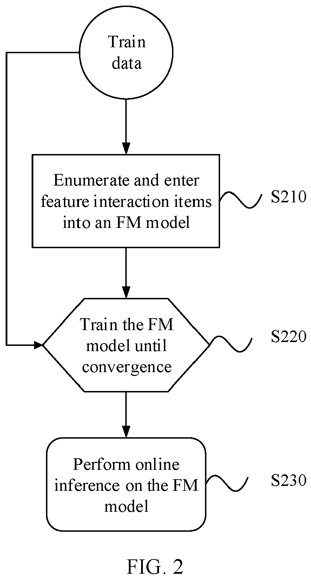

As an example instead of a limitation, a procedure of building an FM model is shown in FIG. 2.

S210: Enumerate feature interaction items and enter the FM model.

For example, the FM model is built by using the formula (1) or the formula (3).

S220: Train the FM model until convergence, to obtain an FM model that can be put into use.

After FM model training is completed, online inference may be performed by using a trained FM model, as shown in step S230 in FIG. 2.

As described above, the FM model includes the feature interaction item of all interactions of single features. Therefore, FM model training has an extremely large computing workload and consumes a lot of time.

In addition, it can be learned from the formula (1) and the formula (3) that a quantity of feature interaction items in the FM model increases sharply with an increase of a feature dimension and an order of feature interaction.

For example, in the formula (1), as the feature dimension m increases, the quantity of feature interaction items increases exponentially. For another example, as the order of feature interaction increases in a switch from a second-order FM model to a third-order FM model, the quantity of feature interaction items in the FM model increases greatly.

Therefore, an increase in the feature dimension and the order of feature interaction results in a huge burden to an inference delay and a computing workload of the FM model. Therefore, a maximum feature dimension and the order of feature interaction that can be accommodated by the FM model are limited. For example, it is difficult to extend the FM model in the current technology to a higher order.

To resolve this problem, feature interaction selection (feature interaction selection, FIS) is proposed.

In some conventional technologies, feature interaction selection is performed in a manual selection manner. Selected feature interaction may require many years of exploration by engineers. This manual selection manner consumes a large amount of manpower, and may miss an important feature interaction item.

To address a disadvantage of manual selection, an automatic feature interaction selection (automatic feature interaction selection, AutoFIS) solution is proposed in the industry. Compared with manual selection, automatic feature interaction selection can select valuable feature interaction in a short period of time.

In the current technology, an automatic feature interaction selection solution is proposed. In the solution, all possible feature interaction subsets are used as search space (search space), and a best candidate subset is selected from n randomly selected candidate subsets by using a discrete algorithm as a selected feature interaction. When each candidate subset is evaluated, training needs to be performed once, resulting in a large computing workload and high computing power consumption. In addition, when each candidate subset is evaluated, entire model training can improve evaluation accuracy, but may cause huge search energy consumption (search cost); mini-batch (mini-batches) training that is used for approximation may result in inaccurate evaluation. In addition, in this solution, as the order of the feature interaction increases, the search space increases exponentially, which increases energy consumption in a search process.

Therefore, the existing automatic feature interaction selection solution has a large computing workload and energy consumption in a search process, and requires high computing power consumption.

For the foregoing problem, this application proposes an automatic feature interaction selection solution. Compared with the conventional technology, this solution can reduce computing power consumption of automatic feature interaction selection, and improve efficiency of automatic feature interaction selection.

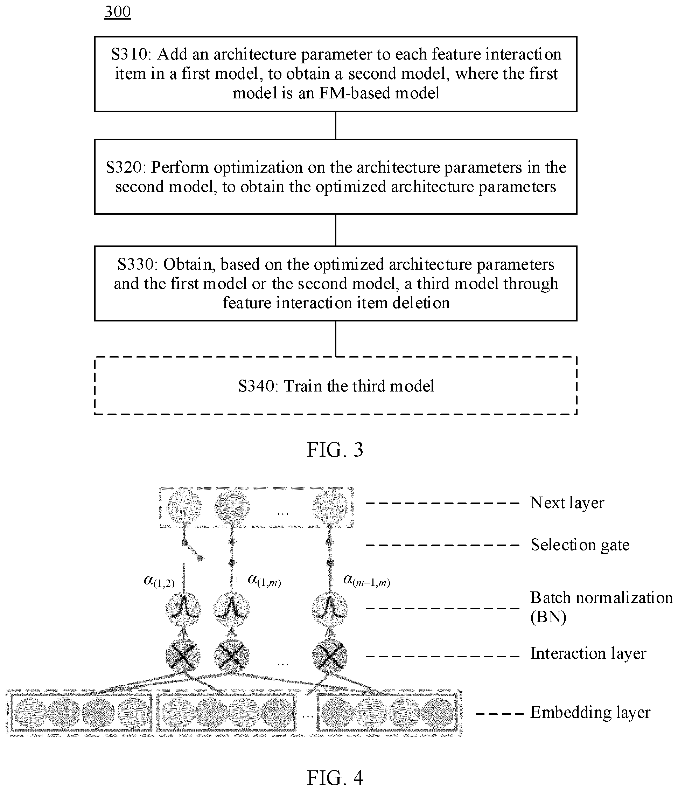

FIG. 3 is a schematic flowchart of a data processing method 300 according to an embodiment of this application. The method 300 includes the following steps: S310, S320, and S330.

S310: Add architecture parameters to each feature interaction item in a first model, to obtain a second model.

The first model is a model based on a factorization machine (factorization machine, FM). In other words, the first model includes a feature interaction item of all interactions of single features, or the first model enumerates a feature interaction item of all interactions.

For example, the first model may be any one of the following FM-based models: an FM model, a DeepFM model, an IPNN model, an AFM model, and an NFM model.

As an example, the first model is a second-order FM model shown in the formula (1) or the formula (2), or the first model is a third-order FM model shown in the formula (3).

In this application, feature interaction item selection is implemented, and the first model may be considered as a model on which a feature interaction item is to be deleted.

Adding architecture parameters to each feature interaction item in the first model means adding a coefficient to each feature interaction item in the first model. In this application, the coefficient is referred to as an architecture parameter. The architecture parameters represent importance of a corresponding feature interaction item. A model obtained after architecture parameters are added to each feature interaction item in the first model is denoted as a second model.

In an example, assuming that the first model is a second-order FM model shown in the formula (1), the second model is shown in the following formula (4)

$$\hat{y}(\mathbf{x}) := w_0 + \sum_{i=1}^{m} w_i x_i + \sum_{i=1}^{m} \sum_{j=i+1}^{m} \alpha_{(i,j)} \langle \mathbf{v}_i, \mathbf{v}_j \rangle x_i x_j$$

$$\langle \mathbf{v}_i, \mathbf{v}_j \rangle := \sum_{f=1}^{k} v_{i,f} \cdot v_{j,f}$$

(4).

x indicates a feature vector, $x_i$ indicates an ith feature, and $x_j$ indicates a jth feature. m indicates a feature dimension, and may also be referred to as a feature field (field). $w_0$ indicates a global offset, and $w_0 \in R$. $w_i$ indicates strength of the ith feature, and $\mathbf{w} \in R^m$. $\mathbf{v}_i$ indicates an auxiliary vector of the ith feature $x_i$. $\mathbf{v}_j$ indicates an auxiliary vector of the jth feature $x_j$. k is dimension of $\mathbf{v}_i$ and $\mathbf{v}_j$. A two-dimensional matrix is $\mathbf{v} \in R^{m \times k}$.
$x_i x_j$ indicates a combination of the ith feature $x_i$ and the jth feature $x_j$.
$\langle \mathbf{v}_i, \mathbf{v}_j \rangle$ indicates a weight parameter of a feature interaction item $x_i x_j$, and $\alpha_{(i,j)}$ indicates an architecture parameter of the feature interaction item $x_i x_j$.
$\langle \mathbf{v}_i, \mathbf{v}_j \rangle$ indicates an inner product of $\mathbf{v}_i$ and $\mathbf{v}_j$, and indicates interaction between the ith feature $x_i$ and the jth feature $x_j$. $\langle \mathbf{v}_i, \mathbf{v}_j \rangle$ may also be understood as a weight parameter of a feature interaction item, for example, $\langle \mathbf{v}_i, \mathbf{v}_j \rangle$ may be denoted as $w_{ij}$.

Assuming that the first model is expressed as the second-order FM model shown in the formula (2), the second model may be expressed as the following formula (5)

$$l_{autoFIS} = \langle w, x \rangle + \sum_{i=1}^{m} \sum_{j>i}^{m} \alpha_{(i,j)} \langle e_i, e_j \rangle$$

(5).

$\alpha_{(i,j)}$ indicates an architecture parameter of a feature interaction item.
In another example, if the first model is a third-order FM model shown in the formula (3), the second model is shown in the following formula (6)

$$l_{autoFIS} = \langle w, x \rangle + \sum_{i=1}^{m} \sum_{j>i}^{m} \alpha_{(i,j)} \langle e_i, e_j \rangle + \sum_{i=1}^{m} \sum_{j>i}^{m} \sum_{t>j}^{m} \alpha_{(i,j,t)} \langle e_i, e_j, e_t \rangle$$

(6).

$\alpha_{(i,j)}$ and $\alpha_{(i,j,t)}$ indicate architecture parameters of feature interaction items.
For ease of understanding and description, the following is agreed in this specification: An original weight parameter (for example, $\langle \mathbf{v}_i, \mathbf{v}_j \rangle$ in the formula 4) of the feature interaction item in the first model is referred to as a model parameter.
In other words, in the second model, each feature interaction item has two types of coefficient parameters: a model parameter and an architecture parameter.
FIG. 4 is a schematic diagram of feature interaction item selection according to an embodiment of this application. An embedding layer and an interaction layer in FIG. 4 have the same meanings as that of the embedding layer and the interaction layer in FIG. 1. As shown in FIG. 4, in this embodiment of this application, architecture parameters $\alpha_{(i,j)}$ ($\alpha_{(1,2)}$, $\alpha_{(1,m)}$, and $\alpha_{(m-1,m)}$ shown in FIG. 4) are added to each feature interaction item at the interaction layer. The interaction layer in FIG. 4 may be considered as a first model, and the interaction layer to which the architecture parameters $\alpha_{(i,j)}$ are added to the feature interaction item may be considered as a second model.
S320: Perform optimization on the architecture parameters in the second model, to obtain the optimized architecture parameters.
For example, optimization is performed on the architecture parameters in the second model by using training data, to obtain the optimized architecture parameters.
For example, the optimized architecture parameters may be considered as optimal values $\alpha^*$ of the architecture parameters in the second model.
In embodiments of this application, the architecture parameters represent importance of a corresponding feature interaction item. Therefore, optimization on the architecture parameters is equivalent to learning importance of each feature interaction item or a contribution degree of each feature interaction item to model prediction. In other words, the optimized architecture parameters represent importance of the learned feature interaction item.
In other words, in embodiments of this application, contribution (or importance) of each feature interaction item may be learned by using the architecture parameters in an end-to-end manner.

S330: Obtain, based on the optimized architecture parameters and the first model or the second model, a third model through feature interaction item deletion.

The third model may be a model obtained through feature interaction item deletion based on the first model.

Optionally, the third model may be a model obtained through feature interaction item deletion based on the second model.

A feature interaction item to be deleted or retained (in other words, selected) may be determined in a plurality of manners.

Optionally, in an implementation, a feature interaction item corresponding to an architecture parameter whose value is less than a threshold in the optimized architecture parameters may be deleted.

The threshold represents a criterion for determining whether to retain a feature interaction item. For example, if values of the optimized architecture parameters of a feature interaction item are less than the threshold, it indicates that the feature interaction item is deleted. If a value of an optimized architecture parameter of a feature interaction item reaches the threshold, it indicates that the feature interaction item is retained (in other words, selected).

The threshold may be determined based on an actual application requirement. For example, a value of the threshold may be obtained through model training. A manner of obtaining the threshold is not limited in this application.

Still refer to FIG. 4. Assuming that the optimized architecture parameters $\alpha_{(1,2)}$ are less than the threshold, a feature interaction item corresponding to the architecture parameters $\alpha_{(1,2)}$ may be deleted. Assuming that the optimized architecture parameters $\alpha_{(1,m)}$ reach the threshold, a feature interaction item corresponding to the architecture parameters $\alpha_{(1,m)}$ may be retained. After the feature interaction item is deleted based on the optimized architecture parameters, a next-layer model is obtained, as shown in FIG. 4. The third model in the embodiment in FIG. 3 is, for example, the next-layer model shown in FIG. 4.

As an example instead of a limitation, as shown in FIG. 4, an operation of determining, based on the optimized architecture parameters, whether to delete a corresponding feature interaction item may be denoted as a selection gate.

It should be noted that FIG. 4 is merely an example rather than a limitation.

Optionally, in another implementation, if values of some architecture parameters change to zero after optimization is completed, feature interaction items corresponding to the optimized architecture parameters whose values are not zero may be directly used as a retained feature interaction item, to obtain the third model.

Optionally, in still another implementation, if values of some architecture parameters change to zero after optimization is completed, a feature interaction item corresponding to an architecture parameter whose value is less than the threshold may be further deleted from feature interaction items corresponding to the optimized architecture parameters whose values are not zero, to obtain the third model.

In this specification, "model through feature interaction item deletion" can be replaced with "model through feature interaction item selection".

As described above, in an existing automatic feature interaction selection solution, all possible feature interaction subsets are used as search space (search space), and a best candidate subset is selected from n randomly selected candidate subsets by using a discrete algorithm as a selected feature interaction. When each candidate subset is evaluated, training needs to be performed once, resulting in a large computing workload and high computing power consumption.

In embodiments of this application, the architecture parameters are introduced into the FM-based model, so that feature interaction item selection can be implemented through optimization on the architecture parameters. That is, in this application, provided that optimization on the architecture parameters is performed once, feature interaction item selection can be implemented, and training for a plurality of candidate subsets in a conventional technology is not required. Therefore, this can effectively reduce a computing workload of feature interaction selection to save computing power, and improve efficiency of feature interaction selection.

In addition, in an existing automatic feature interaction selection solution, feature interaction selection is implemented by searching for a candidate subset from search space (search space). It may be understood that, in a conventional technology, feature interaction selection is resolved as a discrete problem, in other words, a discrete feature interaction candidate set is searched for.

In this embodiment of this application, feature interaction selection is implemented through optimization on the architecture parameters that are introduced into the FM-based model. It may be understood that, in this embodiment of this application, an existing problem of searching for the discrete feature interaction candidate set is continuous, in other words, feature interaction selection is resolved as a continuous problem. For example, the automatic feature interaction selection solution provided in this application may be expressed as a feature interaction search solution based on continuous search space. In other words, in this embodiment of this application, an operation of introducing the architecture parameters into the FM-based model may be considered as continuous modeling for automatic feature interaction item selection.

In addition, an existing automatic feature interaction selection solution cannot be applied to a deep learning model with a long training period, because of the large computing workload and high computing power consumption.

In embodiments of this application, feature interaction selection can be implemented through an optimization process of the architecture parameters. Alternatively, feature interaction item selection can be completed through one end-to-end model training process, so that a period for feature interaction item selection (or search) may be equivalent to a period for one model training. Therefore, feature interaction selection can be applied to a deep learning model with a long training period.

As described above, in the FM model in the conventional technology, because all feature interactions need to be enumerated, it is difficult to extend to a higher order.

In embodiments of this application, the architecture parameters are introduced into the FM-based model, so that feature interaction selection can be implemented through optimization on the architecture parameters. Therefore, in the solution provided in embodiments of this application, the feature interaction item in the FM-based model can be extended to a higher order.

For example, an FM model built by using the solution provided in embodiments of this application may be extended to a third order or a higher order.

For another example, the DeepFM model built by using the solution provided in this embodiment of this application may be extended to a third order or a higher order.

In embodiments of this application, the architecture parameters are introduced into the conventional FM-based model, so that feature interaction selection can be implemented through optimization on the architecture parameters. In other words, in embodiments of this application, the FM-based model that includes the architecture parameters is built, and feature interaction selection can be implemented by performing optimization on the architecture parameters. A method for building the FM-based model that includes the architecture parameters is adding the architecture parameters before each feature interaction item in the conventional FM-based model.

As shown in FIG. 3, the method 300 may include step S340.

S340: Train the third model.

Step S340 may also be understood as performing model training again. It may be understood that the feature interaction item is deleted by using step S310, step S320, and step S330. In step S340, the model through feature interaction item deletion is retrained.

In step S340, the third model may be directly trained, or the third model may be trained after a L1 regular term and/or a L2 regular term are/is added to the third model.

For example, an objective of training the third model may be determined based on an application requirement.

For example, assuming that a click-through rate (click-through rate, CTR) prediction model is to be obtained, the third model is trained by using the obtained CTR prediction model as the training objective, to obtain the CTR prediction model.

For another example, assuming that a conversion rate (conversion rate, CVR) prediction model is to be obtained, the third model is trained by using the conversion rate, CVR prediction model as the training objective, to obtain the CVR prediction model.

In step S320, for example, optimization may be performed on the architecture parameters in the second model by using a plurality of optimization algorithms (or optimizers).

A first optimization algorithm:

Optionally, in step S320, optimization is performed on the architecture parameters, to allow the optimized architecture parameters to be sparse.

For example, in step S320, optimization is performed on the architecture parameters in the second model by using least absolute shrinkage and selection operator (least absolute shrinkage and selection operator, Lasso) regularization (Regularization). The Lasso may also be referred to as a minimum absolute value convergence and selection operator.

The formula (5) applied in the second model is used as an example. In step S320, the following formula (7) may be used to perform optimization on the architecture parameters in the second model:

$$L_{search} = L_{\alpha,w}\left(y, \hat{y}_M\right) + \lambda \sum_{i,j>i} \left|\alpha_{(i,j)}\right| \tag{7}.$$

$L_{\alpha,w}(y, \hat{y}_M)$ indicates a loss function. $y$ indicates a model observed value. $\hat{y}_M$ indicates a model predicted value. $\lambda$ indicates a constant, and its value may be assigned based on a specific requirement.

It should be understood that the formula (7) indicates a constraint condition for architecture parameter optimization.

The optimized architecture parameters are sparse, facilitating subsequent feature interaction item deletion.

Optionally, in an embodiment, in step S320, optimization on the architecture parameters allows the optimized architecture parameters to be sparse; in step S330, the third model is obtained, based on the first model or the second model, after deleting a feature interaction item corresponding to an architecture parameter whose value is less than a threshold in the optimized architecture parameters.

The threshold represents a criterion for determining whether to retain a feature interaction item. For example, if values of the optimized architecture parameters of a feature interaction item are less than the threshold, it indicates that the feature interaction item is deleted. If a value of an optimized architecture parameter of a feature interaction item reaches the threshold, it indicates that the feature interaction item is retained (in other words, selected).

The threshold may be determined based on an actual application requirement. For example, a value of the threshold may be obtained through model training. A manner of obtaining the threshold is not limited in this application.

In embodiments of this application, optimization on the architecture parameters allows the architecture parameters to be sparse, facilitating feature interaction item selection.

It should be understood that the architecture parameters in the second model represent importance or a contribution degree of a corresponding feature interaction. If a value of an optimized architecture parameter is less than the threshold, for example, close to zero, it indicates that a feature interaction item corresponding to the architecture parameter is not important or has a very low contribution degree. Deleting (or referred to as removing or cutting) such feature interaction item can remove noise introduced by the feature interaction item, reduce energy consumption, and improve an inference speed of a model.

Therefore, an appropriate feature interaction selection operation is deleting the feature interaction item corresponding to the architecture parameter whose value is less than the threshold in the optimized architecture parameters.

A second optimization algorithm:
Optionally, in step S320, optimization is performed on the architecture parameters, so that the optimized architecture parameters are sparse and a value of at least one architecture parameter of the feature interaction item is equal to zero after optimization is completed.

It is assumed that a feature interaction item corresponding to an architecture parameter whose value is zero after optimization is completed is considered as an unimportant feature interaction item. Optimization on the architecture parameters in step S320 may be considered as allowing values of architecture parameters of an unimportant feature interaction item to be equal to zero after optimization is completed.

In other words, optimization on the architecture parameters allows the value of at least one architecture parameter of the feature interaction item to tend to zero during an optimization process.

For example, in step S320, the architecture parameters in the second model are optimized using a generalized regularized dual averaging (generalized regularized dual averaging, GRDA) optimizer. The GRDA optimizer allows the architecture parameters to be sparse, and allows the value of at least one architecture parameter of the feature interaction item to gradually tend to zero during an optimization process.

For example, in step S320, the architecture parameters in the second model are optimized by using the following formula (8):

$$\alpha_{t+1} = \arg\min_{\alpha}\left\{ \alpha^{T}\left( -\alpha_0 + \gamma \sum_{i=0}^{t} \nabla L(\alpha_t; y_{i+1}) + g(t, \gamma)\|\alpha\|_1 + \frac{1}{2}\|\alpha\|_2^2 \right)\right\} \tag{8}$$

$\gamma$ indicates a learning rate. $y_{i+1}$ indicates a model observation value. $g(t, \gamma) = c\gamma^{1/2}(t\gamma)^{\mu}$. $c$ and $\mu$ represent adjustable hyperparameters. An objective of adjusting $c$ and $\mu$ is to find a balance between a model accuracy and sparseness of an architecture parameter $\alpha$.

It should be understood that the formula (8) indicates a constraint condition for architecture parameter optimization.

It should be further understood that, in this embodiment, in step S320, the second model obtained through architecture parameter optimization is a model through feature interaction item selection.

In this application, optimization on the architecture parameters allows some architecture parameters to tend to zero, which is equivalent to removing some unimportant feature interaction items in an architecture parameter optimization process. In other words, optimization on the architecture parameters implements architecture parameter optimization and feature interaction item selection. This can improve efficiency of feature interaction selection and reduce a computing workload and computing power consumption.

In addition, in the architecture parameter optimization process, removing some unimportant feature interaction items can prevent noise generated by these unimportant feature interaction items. In this case, a model gradually evolves into an ideal model in the architecture parameter optimization process. In addition, prediction of other parameters (for example, architecture parameters and model parameters of an unremoved feature interaction item) in the model can be more accurate.

Optionally, in an embodiment, in step S320, optimization is performed on the architecture parameters, so that the optimized architecture parameters are sparse and a value of at least one architecture parameter of the feature interaction item is equal to zero after optimization is completed; in step S330, the third model may be obtained in the following plurality of manners.

Manner (1)

In step S330, a feature interaction item corresponding to the optimized architecture parameters may be directly used as a selected feature interaction item, and the third model is obtained based on the selected feature interaction item.
For example, in the first model, the feature interaction item corresponding to the optimized architecture parameters is used as the selected feature interaction item, and remaining feature interaction items are deleted, to obtain the third model.
For another example, the second model obtained after architecture parameter optimization is completed is directly used as the third model.

Manner (2)

In step S330, the feature interaction item corresponding to the architecture parameter whose value is less than the threshold in the optimized architecture parameters is deleted from feature interaction items corresponding to the optimized architecture parameters, to obtain the third model.
The threshold may be determined based on an actual application requirement. For example, a value of the threshold may be obtained through model training. A manner of obtaining the threshold is not limited in this application.
For example, in the first model, the third model is obtained by deleting the feature interaction item other than the feature interaction item corresponding to the optimized architecture parameters and deleting the feature interaction item corresponding to the architecture parameter whose value is less than the threshold in the optimized architecture parameters.
For another example, in the second model obtained through architecture parameter optimization, the third model is obtained after deleting a feature interaction item corresponding to an architecture parameter whose value is less than a threshold in the optimized architecture parameters.
In embodiments of this application, optimization on the architecture parameters allows some architecture parameters to tend to zero, which is equivalent to removing some unimportant feature interaction items in an architecture parameter optimization process. In other words, optimization on the architecture parameters implements architecture parameter optimization and feature interaction item selection. This can improve efficiency of feature interaction selection and reduce a computing workload and computing power consumption.
It can be learned from the foregoing description of step S320 that, in step S330, an implementation of obtaining the third model through feature interaction item selection may be determined based on an optimization manner of the architecture parameters in step S320. The following describes implementations of obtaining the third model in the following two cases.
In a first case, in step S320, optimization is performed on the architecture parameters, to allow the optimized architecture parameters to be sparse.
In step S330, the third model is obtained after deleting the feature interaction item corresponding to the architecture parameter whose value is less than a threshold in the optimized architecture parameters. For the threshold, refer to the foregoing description. Details are not described herein again.
As an example instead of a limitation, optimized architecture parameters obtained after optimization of the architecture parameter (namely, optimization convergence) is completed are denoted as optimal values $\alpha^*$ of the architecture parameters. Based on the optimal values $\alpha^*$, specific feature interaction items that are to be retained or deleted are determined. For example, if an optimal value $\alpha^*_{(i,j)}$ of architecture parameters of a feature interaction item reaches the threshold, the feature interaction item should be retained; if an optimal value $\alpha^*_{(i,j)}$ of architecture parameters of a feature interaction item is less than the threshold, the feature interaction item should be deleted.
For example, in the second model, for each feature interaction item, a switch item $\psi_{(i,j)}$ indicating whether the feature interaction item is retained in a model is set. The second model may be expressed as the following formula (9):

$$\hat{y}(\mathbf{x}) := w_0 + \sum_{i=1}^{m} w_i x_i + \sum_{i=1}^{m} \sum_{j=i+1}^{m} \alpha_{(i,j)} \psi_{(i,j)} \langle \mathbf{v}_i, \mathbf{v}_j \rangle x_i x_j \qquad (9).$$

A value of the switch item $\psi_{(i,j)}$ may be represented by using the following formula (10):

$$\psi_{(i,j)} = \begin{cases} 1 & \left| \alpha^{*}{}_{(i,j)} \right| \geq thr \\ 0 & \left| \alpha^{*}{}_{(i,j)} \right| < thr \end{cases} \tag{10}.$$

*thr* indicates a threshold.

A feature interaction item whose switch item $\psi_{(i,j)}$ is 0 is deleted from the second model, to obtain the third model through feature interaction item selection.

In this embodiment, setting of the switch item $\psi_{(i,j)}$ may be considered as a criterion for determining whether to retain a feature interaction item.

Alternatively, the third model may be a model obtained through feature interaction item deletion based on the first model.

For example, the feature interaction item whose switch item $\psi_{(i,j)}$ is 0 is deleted from the first model, to obtain the third model through feature interaction item selection.

Alternatively, the third model may be a model obtained through feature interaction item deletion based on the second model.

For example, the feature interaction item whose switch item $\psi_{(i,j)}$ is 0 is deleted from the second model, to obtain the third model through feature interaction item selection.

It should be understood that, in this embodiment, the third model has optimized architecture parameters that represent importance of a feature interaction item. Subsequently, importance of the feature interaction item can be further learned through training of the third model.

In a second case, in step S320, optimization is performed on the architecture parameters, so that the optimized architecture parameters are sparse and a value of at least one architecture parameter of the feature interaction item is equal to zero after optimization is completed.

Optionally, in step S330, the third model is obtained by deleting the feature interaction item other than the feature interaction item corresponding to the optimized architecture parameters.

In an example, in step S330, the third model is obtained by deleting the feature interaction item other than the feature interaction item corresponding to the optimized architecture parameters in the first model. In other words, the third model is obtained through feature interaction item deletion based on the first model.

In another example, in step S330, the second model obtained through architecture parameter optimization is used as the third model. In other words, the third model is obtained through feature interaction item deletion based on the second model.

Optionally, in step S330, the third model is obtained by deleting the feature interaction item other than the feature interaction item corresponding to the optimized architecture parameters and deleting the feature interaction item corresponding to the architecture parameter in the optimized architecture parameters whose value is less than the threshold.

In an example, in step S330, the third model is obtained by deleting the feature interaction item other than the feature interaction item corresponding to the optimized architecture parameters and deleting the feature interaction item corresponding to the architecture parameter in the optimized architecture parameters whose value is less than the threshold in the first model. In other words, the third model is obtained through feature interaction item deletion based on the first model.

In another example, in step S330, in the second model obtained through architecture parameter optimization, the third model is obtained after deleting a feature interaction item corresponding to an architecture parameter whose value is less than a threshold in the optimized architecture parameters. In other words, the third model is obtained through feature interaction item deletion based on the second model.

It should be understood that, in an embodiment in which the third model is obtained through feature interaction item deletion based on the second model, the third model has the optimized architecture parameters that represent importance of the feature interaction item. Subsequently, importance of the feature interaction item can be further learned through training of the third model.

It may be understood from the formula (4), the formula (5), or the formula (6) that the second model includes two types of parameters: an architecture parameter and a model parameter. The model parameters indicate weight parameters other than the architecture parameters of the feature interaction item in the second model. For example, in an example of the second model expressed in the formula (4), $\alpha_{(i,j)}$ indicates architecture parameters of the feature interaction item, and $\langle \mathbf{v}_i, \mathbf{v}_j \rangle$ indicates model parameters of the feature interaction item. For example, in an example of the second model expressed in the formula (5), $\alpha_{(i,j)}$ indicates architecture parameters of the feature interaction item, and $\langle e_i, e_j \rangle$ may indicate model parameters of the feature interaction item.

It may be understood that, an architecture parameter optimization process involves architecture parameter training and model parameter training. In other words, optimization on the architecture parameters in the second model in step S320 is accompanied by optimization on the model parameters in the second model.

For example, in the embodiment shown in FIG. 3, the method 300 further includes performing optimization on model parameters in the second model, where optimization includes scalarization processing on the model parameters.

In each round of training in the model parameter optimization process, scalarization processing is performed on the model parameters in the second model.

For example, scalarization processing is performed on the model parameters in the second model by performing batch normalization (batch normalization, BN) on the model parameters in the second model.

For example, in an example of the second model expressed in the formula (5), the following formula (11) may be used to perform optimization on the architecture parameters in the second model:

$$\left\langle e_i, e_j \right\rangle_{BN} = \frac{\left\langle e_i, e_j \right\rangle_{\mathrm{B}} - \mu_{\mathrm{B}}\left(\left\langle e_i, e_j \right\rangle_{\mathrm{B}}\right)}{\sqrt{\sigma_{\mathrm{B}}^2\left(\left\langle e_i, e_j \right\rangle_{\mathrm{B}}\right) + \theta}} \tag{11}.$$

$\left\langle e_i, e_j \right\rangle_{BN}$ indicates batch normalization of $\left\langle e_i, e_j \right\rangle$.

$\left\langle e_i, e_j \right\rangle_{\mathrm{B}}$ indicates mini-batch (min batch) data of $\left\langle e_i, e_j \right\rangle$.

$\mu_{B}(\left\langle e_i, e_j \right\rangle_{\mathrm{B}})$ indicates an average value of mini-batch (min batch) data of $\left\langle e_i, e_j \right\rangle$.

$\sigma_{\mathrm{B}}^2\left(\left\langle e_i, e_j \right\rangle_{\mathrm{B}}\right)$ indicates a variance of mini-batch (min batch) data of $\left\langle e_i, e_j \right\rangle$.

$\theta$ indicates disturbance.

Still refer to FIG. 4. Batch normalization (BN) shown in FIG. 4 indicates that BN processing on the model parameters in the second model.

Scalarization processing is performed on the model parameters of the feature interaction item, to decouple the model parameters of the feature interaction item from the architecture parameters. In this case, the architecture parameters can more accurately reflect importance of the feature interaction item, further improving optimization accuracy of the architecture parameters. This is explained as follows.

It should be understood that $e_i$ is continuously updated and changed in a model training process. After inner product is performed on $e_i$ and $e_j$, in other words, $\left\langle e_i, e_j \right\rangle$, scales (scale) of the inner product are constantly updated. It is assumed that may be obtained through $\left(\dfrac{\alpha_{(i,j)}}{\eta}\right)\left(\eta \cdot \left\langle e_i, e_j \right\rangle\right)$, where a first term $\left(\dfrac{\alpha_{(i,j)}}{\eta}\right)$ is coupled to a second

term $(\eta \cdot \left\langle e_i, e_j \right\rangle)$. If the second item $(\eta \cdot \left\langle e_i, e_j \right\rangle)$ is not scalarized, the first item $\left(\dfrac{\alpha_{(i,j)}}{\eta}\right)$ cannot absolutely represent importance of the second item, causing great instability to a system.

In this embodiment of this application, scalarization processing is performed on the model parameters of the feature interaction item, so that a phenomenon that $\alpha_{(i,j)}\left\langle e_i, e_j \right\rangle$ can be obtained through does not exist, in other words, the model parameters of the feature interaction item can be decoupled from the architecture parameters.

The model parameters of the feature interaction item are decoupled from the architecture parameters, so that the architecture parameters can more accurately reflect importance of the feature interaction item, further improving optimization accuracy of the architecture parameters.

In other words, scalarization processing is performed on the model parameters of the feature interaction item, to decouple the model parameters of the feature interaction item from the architecture parameters, so that no coupling effect between the model parameters and the architecture parameters of the feature interaction item cause large instability in the system.

As described above, the second model includes two types of parameters: the architecture parameters and the model parameters. An architecture parameter optimization process involves architecture parameter training and model parameter training. In other words, optimization on the architecture parameters in the second model in step S320 is accompanied by optimization on the model parameters in the second model.

For ease of understanding and description, in the following description, an architecture parameter in the second model is denoted as $\alpha$, and a model parameter in the second model is denoted as w (corresponding to $\langle \mathbf{v}_i, \mathbf{v}_j \rangle$ in the formula (4)).

Optionally, in the embodiment shown in FIG. 3, optimization processing on the architecture parameter $\alpha$ in the second model and optimization processing on the model parameter w in the second model include: two-level (two-level) optimization processing on the architecture parameter $\alpha$ and the model parameter w in the second model.

In other words, in step S320, two-layer (two-level) optimization processing is performed on the architecture parameter $\alpha$ and the model parameter w in the second model, to obtain the optimized architecture parameter $\alpha^*$.

In this embodiment, the architecture parameter $\alpha$ in the second model is used as a model hyperparameter for optimization, and the model parameter w in the second model is used as a model parameter for optimization. In other words, the architecture parameter $\alpha$ is used as a high-level decision variable, and the model parameter w is used as a low-level decision variable. Any value of the high-level decision variable $\alpha$ corresponds to a different model.

Optionally, when a model corresponding to any value of the high-level decision variable $\alpha$ is evaluated, an optimal model parameter woptimal is obtained through entire training of the model. In other words, each time a candidate value of the architecture parameter $\alpha$ is evaluated, entire training of a model corresponding to the candidate value is performed.

Optionally, when a model corresponding to any value of the high-level decision variable $\alpha$ is evaluated, wt+1 obtained by updating the model in one step by using mini-batch (mini-batches) data is used to replace the optimal model parameter woptimal.

Optionally, in the embodiment shown in FIG. 3, optimization processing on the architecture parameter $\alpha$ in the second model and optimization processing on the model parameter w in the second model include: simultaneous optimization on both the architecture parameter $\alpha$ and the model parameter w in the second model by using same training data.

In other words, in step S320, simultaneous optimization processing is performed on both the architecture parameter $\alpha$ and the model parameter w in the second model, to obtain the optimized architecture parameter $\alpha^*$ by using the same training data.

In this embodiment, in each round of training in an optimization process, simultaneous optimization is performed on both the architecture parameter $\alpha$ and the model parameter w based on a same batch of training data. Alternatively, the architecture parameter and the model parameter in the second model are considered as decision variables at a same level, and simultaneous optimization is performed on both the architecture parameter $\alpha$ and the model parameter w in the second model, to obtain the optimized architecture parameter $\alpha^*$ .

In this embodiment, optimization processing performed on the architecture parameter $\alpha$ and the model parameter w in the second model may be referred to as one-level (one-level) optimization processing.

For example, the architecture parameter $\alpha$ in the second model and the model parameter w freely explore their feasible regions in stochastic gradient descent (stochastic gradient descent, SGD) optimization until convergence.

For example, optimization on the architecture parameter $\alpha$ and the model parameter w in the second model is implemented by using the following formula (12):

$$\begin{aligned} \alpha_t &= \alpha_{t-1} - \eta_t \cdot \partial_\alpha L_{train}\big(w_{t-1}, \alpha_{t-1}\big) \\ w_t &= w_{t-1} - \delta_t \cdot \partial_w L_{train}\big(w_{t-1}, \alpha_{t-1}\big) \end{aligned} \tag{12}.$$

$\alpha_t$ indicates an architecture parameter after optimization in step t is performed. $\alpha_{t-1}$ indicates an architecture parameter after optimization in step t-1 is performed. $w_t$ indicates a model parameter after optimization in step t is performed. $w_{t-1}$ indicates a model parameter after optimization in step t-1 is performed. $\eta_t$ indicates an optimization rate of an architecture parameter during optimization in step t. $\delta_t$ indicates a learning rate of a model parameter during optimization in step t. $L_{train}(w_{t-1}, \alpha_{t-1})$ indicates a loss function value of a loss function on a test set during optimization in step t. $\partial_\alpha L_{train}(w_{t-1}, \alpha_{t-1})$ indicates a gradient of the loss function on the test set relative to the architecture parameter $\alpha$ during optimization in step t. $\partial_w L_{train}(w_{t-1}, \alpha_{t-1})$ indicates a gradient of the loss function on the test set relative to the model parameter w during optimization in step t.

In this embodiment, one-layer optimization processing is performed on the architecture parameters and the model parameters in the second model, to implement optimization on the architecture parameters in the second model, so that the architecture parameters and the model parameters can be optimized at the same time. Therefore, time consumed in an optimization process of the architecture parameters in the second model can be reduced, to further help improve efficiency of feature interaction item selection.

After step S330 is completed, in other words, feature interaction item selection is completed, the third model is a model obtained through feature interaction item selection.

In step S340, the third model is trained.

The third model may be trained, or the third model may be trained after a L1 regular term and/or a L2 regular term are/is added to the third model.

An objective of training the third model may be determined based on an application requirement.

For example, assuming that a click-through rate (click-through rate, CTR) prediction model is to be obtained, the third model is trained by using the obtained CTR prediction model as the training objective, to obtain the CTR prediction model.

For another example, assuming that a conversion rate (conversion rate, CVR) prediction model is to be obtained, the third model is trained by using the conversion rate, CVR prediction model as the training objective, to obtain the CVR prediction model.

Optionally, the third model is a model obtained through feature interaction item deletion based on the first model. For details, refer to the foregoing description of step S330. Details are not described herein again.

Optionally, the third model is a model obtained through feature interaction item deletion based on the second model. For details, refer to the foregoing description of step S330. Details are not described herein again.

It should be understood that after feature interaction item deletion (or selection), the architecture parameters are retained in the model to train the model, so that importance of the feature interaction item can be further learned.

It can be learned from the foregoing description that, in embodiments of this application, the architecture parameters are introduced into the FM-based model, so that feature interaction item selection can be implemented through optimization on the architecture parameters. That is, in this application, feature interaction item selection can be implemented through optimization on the architecture parameters, and training for a plurality of candidate subsets in the conventional technology is not required. Therefore, this can effectively reduce a computing workload of feature interaction selection to save computing power, and improve efficiency of feature interaction selection.

In addition, in the solution provided in this embodiment of this application, the feature interaction item in the FM-based model can be extended to a higher order.

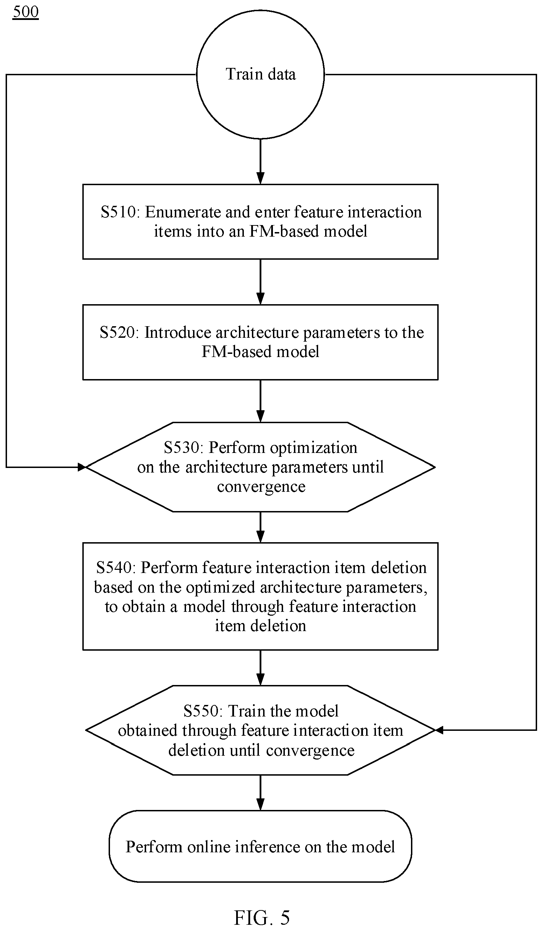

FIG. 5 is another schematic flowchart of an automatic feature interaction selection method 500 according to an embodiment of this application.

First, training data is obtained.

For example, assuming that a feature dimension is m, the training data is obtained for features of m regions.

S510:Enumerate feature interaction items and enter an FM-based model.

The FM-based model may be the FM model shown in the foregoing formula (1) or formula (2), or may be any one of the following FM-based models: a DeepFM model, an IPNN model, an AFM model, and an NFM model.

The enumerating feature interaction items and entering an FM-based model means building, based on all interactions of m features, a feature interaction item based on an FM model.

It should be understood that when the feature interaction item is built, auxiliary vectors of m features are involved.

For example, the embedding (embedding) layer shown in FIG. 1 or FIG. 3 may be used to obtain the auxiliary vectors of the m features. A technology of obtaining the auxiliary vectors of m features through the embedding (embedding) layer belongs to a conventional technology. Details are not described in this specification.

S520: Introduce architecture parameters to the FM-based model. Specifically, one coefficient parameter is added to each feature interaction item in the FM-based model, and the coefficient parameter is referred to as an architecture parameter.

Step S520 is corresponding to step S310 in the foregoing embodiment. For specific descriptions, refer to the foregoing description.

The FM-based model in the embodiment shown in FIG. 5 is corresponding to the first model in the embodiment shown in FIG. 3, and a model obtained after architecture parameters are added to the FM-based model in the embodiment shown in FIG. 5 is corresponding to the second model in the embodiment shown in FIG. 3.

S530: Perform optimization on the architecture parameters until convergence, to obtain the optimized architecture parameters.

Step S530 is corresponding to step S320 in the foregoing embodiment. For specific descriptions, refer to the foregoing description.

S540: Perform feature interaction item deletion based on the optimized architecture parameters, to obtain a model through feature interaction item deletion.

Step S540 is corresponding to step S330 in the foregoing embodiment. For specific descriptions, refer to the foregoing description.

The model through feature interaction item deletion in the embodiment shown in FIG. 5 is corresponding to the third model in the embodiment shown in FIG. 3.

S550. Train the model through feature interaction item deletion until convergence, to obtain a CTR prediction model.

Step S550 is corresponding to step S340 in the foregoing embodiment. For specific descriptions, refer to the foregoing description.

After the CTR prediction model is obtained through training, online inference may be performed on the CTR prediction model.

For example, data of a target object is input into the CTR prediction model, and the CTR prediction model outputs a click-through rate of the target object. Whether to recommend the target object may be determined based on the click-through rate.

An automatic feature interaction selection solution provided in this embodiment of this application may be applied to any factorization machine (factorization machine, FM)-based model, for example, an FM model, a DeepFM model, an IPNN model, an AFM model, and an NFM model.

In an example, the automatic feature interaction selection solution provided in this embodiment of this application may be applied to an existing FM model.

For example, the architecture parameters are introduced into the existing FM model, so that importance of each feature interaction item is obtained through optimization on the architecture parameters. Then feature interaction selection is implemented based on the importance of each feature interaction item, to finally obtain an FM model through feature interaction selection.

It should be understood that, the solution in this application is applied to the FM model, so that feature interaction item selection of the FM model can be efficiently implemented, to extend the feature interaction item of the FM model to a higher order.

In another example, the automatic feature interaction selection solution provided in this embodiment of this application may be applied to an existing DeepFM model.

For example, the architecture parameters are introduced into the existing DeepFM model, so that importance of each feature interaction item is obtained through optimization on the architecture parameters. Then feature interaction selection is implemented based on the importance of each feature interaction item, to finally obtain a DeepFM through feature interaction selection.

It should be understood that, the solution in this application is applied to the DeepFM model, so that feature interaction item selection of the DeepFM model can be efficiently implemented.

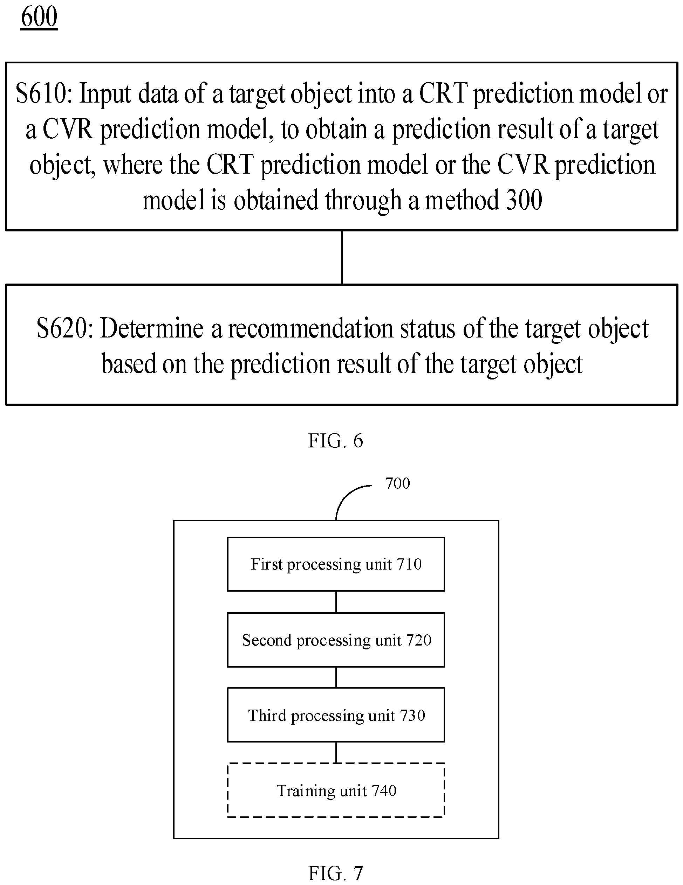

As shown in FIG. 6, this embodiment of this application further provides a data processing method 600. The method 600 includes the following steps: S610 and S620.

S610: Input data of a target object into a CTR prediction model or a CVR prediction model, to obtain a prediction result of a target object.

For example, the target object is a commodity.

S620: Determine a recommendation status of the target object based on the prediction result of the target object.

The CTR prediction model or the CVR prediction model is obtained through the method 300 provided in the foregoing embodiment, that is, the CTR prediction model or the CVR prediction model is obtained through step S310 to step S340 in the foregoing embodiment. Refer to the foregoing description. Details are not described herein again.

In step S340, a third model is trained by using a training sample of the target object, to obtain the CTR prediction model or the CVR prediction model.

Optionally, in step S320, simultaneous optimization is performed on both architecture parameters and model parameters in a second model by using the same training data as the training sample of the target object, to obtain the optimized architecture parameters.

Alternatively, the architecture parameters and the model parameters in the second model are considered as decision variables at a same level, and simultaneous optimization is performed on both the architecture parameters and the model parameters in the second model by using the training sample of the target object, to obtain the optimized architecture parameters.

Simulation testing: CTR prediction accuracy of online A/B testing is significantly improved, and inference energy consumption is greatly reduced.

As an example, simulation testing shows that when the feature interaction selection solution provided in this application is applied to the DeepFM model of a recommender system and online A/B testing is performed, a game download rate can be increased by 20%, a CTR prediction accuracy rate can be relatively improved by 20.3%, and a conversion rate (conversion rate, CVR) can be relatively improved by 20.1%. Therefore, a model inference speed can be effectively accelerated.

In an example, an FM model and a DeepFM model are obtained on a public dataset Avazu by using the solution provided in this application. Results of comparing performance of the FM model and the DeepFM model obtained by using the solution in this application with performance of another model in the industry are shown in Table 1 and Table 2. Table 1 indicates comparison of second-order models, and Table 2 indicates comparison of third-order models. In the second-order mode, the highest order of a feature interaction item of a model is second order. In the third-order mode, the highest order of a feature interaction item of a model is third order.

**Table 1**

| Model (model) | Public dataset Avazu | | | | | |
|---|---|---|---|---|---|---|
| | AUC | Log loss | Top | Time (s) | Search+re-train cost (min) | Rel.Impr |
| FM | 0.7793 | 0.3805 | 100% | 0.51 | 0+3 | 0 |
| FwFM | 0.7822 | 0.3784 | 100% | 0.52 | 0+4 | 0.37% |
| AFM | 0.7806 | 0.3794 | 100% | 1.92 | 0+14 | 0.17% |
| FFM | 0.7831 | 0.3781 | 100% | 0.24 | 0+6 | 0.49% |
| DeepFM | 0.7836 | 0.3776 | 100% | 0.76 | 0+6 | 0.55% |
| GBDT+LR | 0.7721 | 0.3841 | 100% | 0.45 | 8+3 | -0.92% |
| GBDT+FFM | 0.7835 | 0.3777 | 100% | 2.66 | 6+21 | 0.54% |
| AutoFM (2nd) | 0.7831 | 0.3778 | 29% | 0.23 | 4+2 | 0.49% |
| AutoDeepFM (2nd) | 0.7852 | 0.3765 | 24% | 0.48 | 7+4 | 0.76% |

**Table 2**

| Model (model) | Public dataset Avazu | | | | | |
|---|---|---|---|---|---|---|
| | AUC | Log loss | Top | Time (s) | Search+re-train cost (min) | Rel.Impr |
| FM (3rd) | 0.7843 | 0.3772 | 100% | 5.70 | 0+21 | 0.64% |
| DeepFM (3rd) | 0.7854 | 0.3765 | 100% | 5.97 | 0+23 | 0.78% |
| AutoFM (3rd) | 0.7860 | 0.3762 | 25%/2% | 0.33 | 22+5 | 0.86% |
| AutoDeepFM (3rd) | 0.7870 | 0.3756 | 21%/10% | 0.94 | 24+10 | 0.99% |

In Table 1 and Table 2, meanings of horizontal table headers are as follows.

AUC (area under curve) indicates an area under a curve. Log loss indicates log of a loss value. Top indicates a proportion of feature interaction items retained after feature interaction items selection. Time indicates a time period for a model to infer two million samples. Search+re-train cost indicates a time period consumed for search and retraining, where a time period consumed for search indicates a time period consumed for step S320 and step S330 in the foregoing embodiment, and a time period consumed for retraining indicates a time period consumed for step S340 in the foregoing embodiment. Rel.Impr indicates a relative increase value.

In Table 1, meanings of vertical table headers are as follows.

FM, FwFM, AFM, FFM, and DeepFM represent FM-based models in a conventional technology. GBDT+LR and GBDT+FFM indicate models that use manual feature interaction selection in the conventional technology.

AutoFM (2nd) represents a second-order FM model obtained by using the solution provided in this embodiment of this application. AutoDeepFM (2nd) represents a third-order DeepFM model obtained by using the solution provided in this embodiment of this application.

In Table 2, meanings of vertical table headers are as follows.

FM (3rd) represents a third-order FM model in a conventional technology. DeepFM (3rd) represents a third-order DeepFM model in the conventional technology.

AutoFM (3rd) represents a third-order FM model obtained by using the solution provided in this embodiment of this application. AutoDeepFM (3rd) represents a third-order DeepFM model obtained by using the solution provided in this embodiment of this application.

It can be learned from Table 1 and Table 2 that, compared with the conventional technology, CTR prediction performed by using the FM model or the DeepFM model obtained in the solution provided in this embodiment of this application can significantly improve CTR prediction accuracy, and can effectively reduce inference duration and energy consumption.

It can be learned from the foregoing description that, in embodiments of this application, the architecture parameters are introduced into the FM-based model, so that feature interaction item selection can be implemented through optimization on the architecture parameters. That is, in this application, provided that optimization on the architecture parameters is performed once, feature interaction item selection can be implemented, and training for a plurality of candidate subsets in the conventional technology is not required. Therefore, this can effectively reduce a computing workload of feature interaction selection to save computing power, and improve efficiency of feature interaction selection.

In addition, in the solution provided in this embodiment of this application, the feature interaction item in the FM-based model can be extended to a higher order.

Embodiments described in this specification may be independent solutions, or may be combined based on internal logic. All these solutions fall within the protection scope of this application.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

As shown in FIG. 7, this embodiment of this application further provides a data processing apparatus 700. The apparatus 700 includes the following units.

A first processing unit 710 is configured to add architecture parameters to each feature interaction item in a first model, to obtain a second model, where the first model is a factorization machine FM-based model, and the architecture parameters represent importance of a corresponding feature interaction item.

A second processing unit 720 is configured to perform optimization on the architecture parameters in the second model, to obtain the optimized architecture parameters.

A third processing unit 730 is configured to obtain, based on the optimized architecture parameters and the first model or the second model, a third model through feature interaction item deletion.

Optionally, the second processing unit 720 performs optimization on the architecture parameters, to allow the optimized architecture parameters to be sparse.

In this embodiment, the third processing unit 730 is configured to obtain, based on the first model or the second model, the third model after deleting a feature interaction item corresponding to an architecture parameter whose value is less than a threshold in the optimized architecture parameters.

Optionally, the second processing unit 720 performs optimization on the architecture parameters, to allow a value of at least one architecture parameter of the feature interaction item to be equal to zero after optimization is completed.

For example, the third processing unit 730 is configured to optimize the architecture parameters in the second model using a gRDA optimizer, where the gRDA optimizer allows the value of at least one architecture parameter of the feature interaction item to tend to zero during an optimization process.

Optionally, the second processing unit 720 is further configured to perform optimization on model parameters in the second model, where optimization includes scalarization processing on the model parameters in the second model.

For example, the second processing unit 720 is configured to perform batch normalization BN processing on the model parameters in the second model.

Optionally, the second processing unit 720 is configured to perform simultaneous optimization on both the architecture parameters and model parameters in a second model by using same training data, to obtain the optimized architecture parameters.

Optionally, the apparatus 700 further includes a training unit 740, configured to train the third model.

Optionally, the training unit 740 is configured to train the third model, to obtain a CTR prediction model or a CVR prediction model.

The apparatus 700 may be integrated into a terminal device, a network device, or a chip.

The apparatus 700 may be deployed on a compute node of a related device.

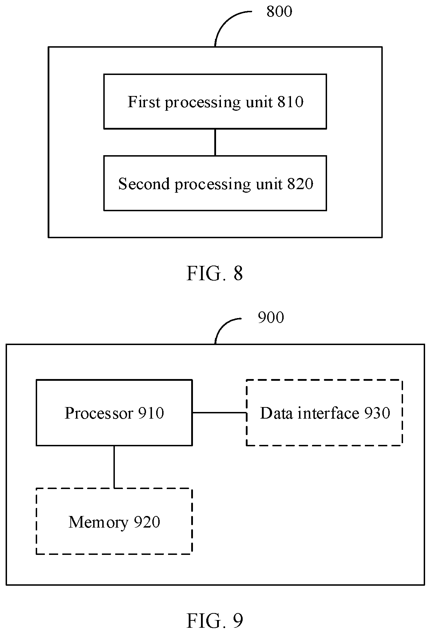

As shown in FIG. 8, this embodiment of this application further provides an image processing apparatus 800. The apparatus 800 includes the following units.

A first processing unit 810 is configured to input data of a target object into a click-through rate CTR prediction model or a conversion rate CVR prediction model, to obtain a prediction result of the target object.

A first processing unit 820 is configured to determine a recommendation status of the target object based on the prediction result of the target object.

The CTR prediction model or the CVR prediction model is obtained through the method 300 or 500 in the foregoing embodiments.

Training of a third model includes the following step: train the third model by using a training sample of the target object, to obtain the CTR prediction model or the CVR prediction model.

Optionally, optimization on architecture parameters includes the following step: perform simultaneous optimization on both the architecture parameters and model parameters in a second model by using the same training data as the training sample of the target object, to obtain the optimized architecture parameters.

The apparatus 800 may be integrated into a terminal device, a network device, or a chip.

The apparatus 800 may be deployed on a compute node of a related device.

As shown in FIG. 9, this embodiment of this application further provides an image processing apparatus 900.

The apparatus 900 includes a processor 910, the processor 910 is coupled to a memory 920, the memory 920 is configured to store a computer program or instructions, and the processor 910 is configured to execute the computer program or the instructions stored in the memory 920, so that the method in the foregoing method embodiments is performed.

Optionally, as shown in FIG. 9, the apparatus 900 may further include a memory 920.

Optionally, as shown in FIG. 9, the apparatus 900 may further include a data interface 930, where the data interface 930 is configured to transmit data to the outside.

Optionally, in a solution, the apparatus 900 is configured to implement the method 300 in the foregoing embodiment.

Optionally, in another solution, the apparatus 900 is configured to implement the method 500 in the foregoing embodiment.

Optionally, in still another solution, the apparatus 900 is configured to implement the method 600 in the foregoing embodiment.

An embodiment of this application further provides a computer-readable medium. The computer-readable medium stores program code to be executed by a device, and the program code is used to perform the method in the foregoing embodiments.

An embodiment of this application further provides a computer program product including instructions. When the computer program product is run on a computer, the computer is enabled to perform the method in the foregoing embodiments.

An embodiment of this application further provides a chip, and the chip includes a processor and a data interface. The processor reads, through the data interface, instructions stored in a memory to perform the method in the foregoing embodiments.

Optionally, in an implementation, the chip may further include a storage and the storage stores instructions; the processor is configured to execute the instructions stored in the storage, and when the instructions are executed, the processor is configured to perform the method in the foregoing embodiments.

An embodiment of this application further provides an electronic device. The electronic device includes any one or more of the apparatus 700, the apparatus 800, or the apparatus 900 in the foregoing embodiments.

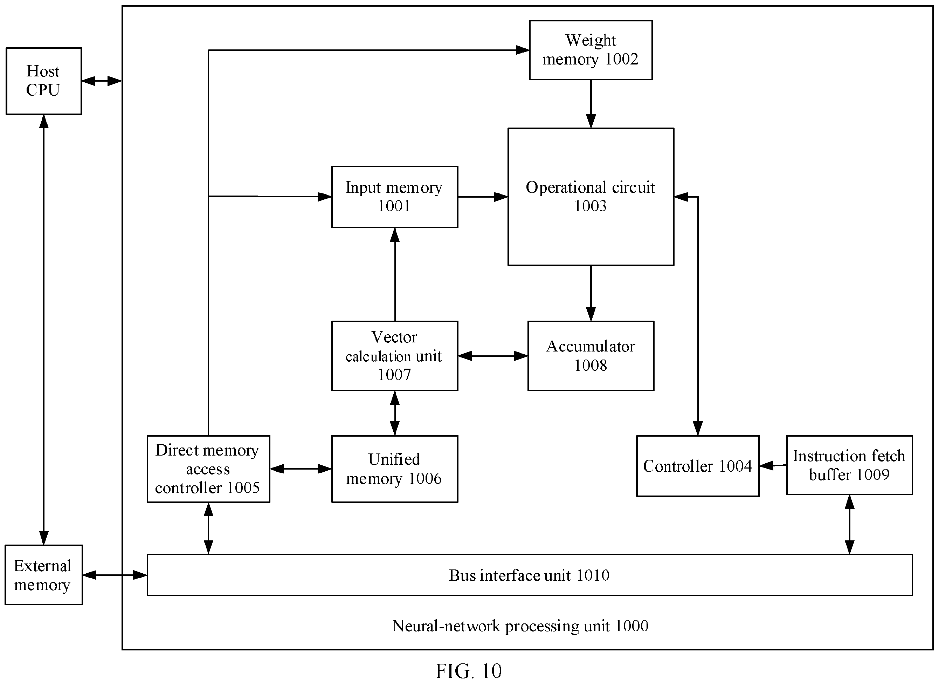

FIG. 10 is a schematic diagram of a hardware architecture of a chip according to an embodiment of this application. The chip includes a neural-network processing unit 1000. The chip may be disposed in any one or more of the following apparatuses or systems:

the apparatus 700 shown in FIG. 7, the apparatus 800 shown in FIG. 8, and the apparatus 900 shown in FIG. 9.

The method 300, 500, or 600 in the foregoing method embodiments may be implemented in the chip shown in FIG. 10.

The neural-network processing unit 1000 serves as a coprocessor, and is disposed on a host CPU (Host CPU). The host CPU assigns a task. A core part of the neural-network processing unit 1000 is an operational circuit 1003, and a controller 1004 controls the operational circuit 1003 to obtain data in a memory (a weight memory 1002 or an input memory 1001) and perform an operation.

In some implementations, the operational circuit 1003 includes a plurality of processing engines (process engine, PE). In some implementations, the operational circuit 1003 is a two-dimensional systolic array. Alternatively, the operational circuit 1003 may be a one-dimensional systolic array or another electronic circuit that can perform mathematical operations such as multiplication and addition. In some implementations, the operational circuit 1003 is a general-purpose matrix processor.

For example, it is assumed that there are an input matrix A, a weight matrix B, and an output matrix C. The operational circuit 1003 extracts corresponding data of the matrix B from a weight memory 1002, and buffers the corresponding data into each PE in the operational circuit 1003. The operational circuit 1003 fetches data of the matrix A from an input memory 1001, to perform a matrix operation on the matrix B, and stores an obtained partial result or an obtained final result of the matrix into an accumulator (accumulator) 1008.

A vector calculation unit 1007 may perform further processing such as vector multiplication, vector addition, an exponent operation, a logarithmic operation, or value comparison on output of the operational circuit 1003. For example, the vector calculation unit 1007 may be configured to perform network calculation, such as pooling (pooling), batch normalization (batch normalization), or local response normalization (local response normalization) at a non-convolutional/non-FC layer in a neural network.

In some implementations, the vector calculation unit 1007 can store a processed output vector in a unified memory (which may also be referred to as a unified buffer) 1006. For example, the vector calculation unit 1007 may apply a non-linear function to the output of the operational circuit 1003, for example, a vector of an accumulated value, to generate an activation value. In some implementations, the vector calculation unit 1007 generates a normalized value, a combined value, or both a normalized value and a combined value. In some implementations, the processed output vector can be used as an activation input for the operational circuit 1003, for example, used in a subsequent layer in the neural network.

The method 300, 500, or 600 in the foregoing method embodiments may be performed by 1003 or 1007.

The unified memory 1006 is configured to store input data and output data.

For weight data, a direct memory access controller (direct memory access controller, DMAC) 1005 directly transfers input data in an external memory to the input memory 1001 and/or the unified memory 1006, stores weight data in the external memory in the weight memory 1002, and stores data in the unified memory 1006 in the external memory.

A bus interface unit (bus interface unit, BIU) 1010 is configured to implement interaction between the host CPU, the DMAC, and an instruction fetch buffer 1009 by using a bus.

The instruction fetch buffer (instruction fetch buffer) 1009 connected to the controller 1004 is configured to store an instruction used by the controller 1004.

The controller 1004 is configured to invoke the instruction cached in the instruction fetch buffer 1009, to control a working process of an operation accelerator.

In this embodiment of this application, the data herein may be to-be-processed image data.

Generally, the unified memory 1006, the input memory 1001, the weight memory 1002, and the instruction fetch buffer 1009 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Unless otherwise defined, all technical and scientific terms used in this specification have same meanings as that usually understood by a person skilled in the art of this application. The terms used in the specification of this application are merely for the purpose of describing specific embodiments, and are not intended to limit this application.

It should be noted that "first", "second", "third", or "fourth", and various numbers in this specification are merely used for differentiation for ease of description, and are not construed as a limitation to the scope of this application.

A person skilled in the art may be aware that units and algorithm steps in the examples described with reference to the embodiments disclosed in this specification can be implemented by electronic hardware or an interaction of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in an electrical form, a mechanical form, or other forms.

The units described as separate parts may or may not be physically separate. Parts displayed as units may or may not be physical units, and may be located in one position or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a universal serial bus flash disk (USB flash disk, UFD) (UFD may also be referred to as a USB flash drive or a flash memory), a removable hard disk, a read-only memory (read-only memory, ROM), a random access memory (random access memory, RAM), a magnetic disk, or a compact disc. The UFD may also be briefly referred to as a USB flash drive or a USB flash drive.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data processing method, comprising:

   adding architecture parameters to each feature interaction item in a first model, to obtain a second model, wherein the first model is a factorization machine FM-based model, and the architecture parameters represent importance of a corresponding feature interaction item;
   performing optimization on the architecture parameters in the second model, to obtain the optimized architecture parameters; and
   obtaining, based on the optimized architecture parameters and the first model or the second model, a third model through feature interaction item deletion.

2. The method according to claim 1, wherein optimization allows the optimized architecture parameters to be sparse.

3. The method according to claim 2, wherein the obtaining, based on the optimized architecture parameters and the first model or the second model, a third model through feature interaction item deletion comprises:
   obtaining, based on the first model or the second model, the third model after deleting a feature interaction item corresponding to an architecture parameter whose value is less than a threshold in the optimized architecture parameters.

4. The method according to any one of claims 1 to 3, wherein optimization allows a value of at least one architecture parameter of the feature interaction item to be equal to zero after optimization is completed.

5. The method according to claim 4, wherein optimization optimizes the architecture parameters in the second model using a generalized regularized dual averaging gRDA optimizer, wherein the gRDA optimizer allows the value of at least one architecture parameter of the feature interaction item to tend to zero during an optimization process.

6. The method according to any one of claims 1 to 5, wherein the method further comprises:
   performing optimization on model parameters in the second model, wherein optimization comprises scalarization processing on the model parameters.

7. The method according to claim 6, wherein optimization comprises performing batch normalization BN processing on the model parameters in the second model.

8. The method according to any one of claim 6, wherein the performing optimization on the architecture parameters in the second model and the performing optimization on the model parameters in the second model comprise:
   performing simultaneous optimization on both the architecture parameters and the model parameters in the second model by using same training data.

9. The method according to any one of claims 1 to 8, wherein the method further comprises: training the third model to obtain a click-through rate CTR prediction model or a conversion rate CVR prediction model.

10. A data processing method, comprising:

    inputting data of a target object into a click-through rate CTR prediction model or a conversion rate CVR prediction model, to obtain a prediction result of the target object;
    determining a recommendation result of the target object based on the prediction result of the target object, wherein
    the CTR prediction model or the CVR prediction model is obtained through the following process:

    adding architecture parameters to each feature interaction item in a first model, to obtain a second model, wherein the first model is a factorization machine FM-based model, and the architecture parameters represent importance of a corresponding feature interaction item;
    performing optimization on the architecture parameters in the second model, to obtain the optimized architecture parameters;

obtaining, based on the optimized architecture parameters and the first model or the second model, a third model through feature interaction item deletion; and

training the third model by using a training sample of the target object, to obtain the CTR prediction model or the CVR prediction model.

11. The method according to claim 10, wherein optimization allows the optimized architecture parameters to be sparse.

12. The method according to claim 11, wherein the obtaining, based on the optimized architecture parameters and the first model or the second model, a third model through feature interaction item deletion comprises:

obtaining the third model after deleting a feature interaction item corresponding to an architecture parameter whose value is less than a threshold in the optimized architecture parameters.

13. The method according to any one of claims 10 to 12, wherein optimization allows a value of at least one architecture parameter of a feature interaction item to be equal to zero after optimization is completed.

14. The method according to claim 13, wherein optimization optimizes the architecture parameters in the second model using a generalized regularized dual averaging gRDA optimizer, wherein the gRDA optimizer allows the value of at least one architecture parameter of the feature interaction item to tend to zero during an optimization process.

15. The method according to any one of claims 10 to 14, wherein the process of obtaining the CTR prediction model or the CVR prediction model further comprises: performing optimization on model parameters in the second model, wherein optimization comprises scalarization processing on the model parameters.

16. The method according to claim 15, wherein optimization comprises performing batch normalization BN processing on the model parameters in the second model.

17. The method according to claim 15, wherein the performing optimization on the architecture parameters in the second model and the performing optimization on the model parameters in the second model comprise:

performing simultaneous optimization on both the architecture parameters and the model parameters in the second model by using the same training data as the training sample of the target object.

18. An image processing apparatus, comprising:

a memory, configured to store a program; and

a processor, configured to execute the program stored in the storage, wherein when the program stored in the storage is executed, the processor is configured to perform the method according to any one of claims 1 to 17.

19. A computer-readable storage medium, wherein the computer-readable medium stores program code to be executed by a device, and when the program code is executed, the device performs the method according to any one of claims 1 to 17.

20. A chip, comprising at least one processor and a data interface, wherein

the at least one processor is configured to invoke and run, by using the data interface, a computer program stored in a memory, to enable the chip to perform the method according to any one of claims 1 to 17.

FIG. 1

FIG. 2

300

S310: Add an architecture parameter to each feature interaction item in a first model, to obtain a second model, where the first model is an FM-based model

S320: Perform optimization on the architecture parameters in the second model, to obtain the optimized architecture parameters

S330: Obtain, based on the optimized architecture parameters and the first model or the second model, a third model through feature interaction item deletion

S340: Train the third model

FIG. 3

$\alpha_{(1,2)}$  $\alpha_{(1,m)}$  $\alpha_{(m-1,m)}$

Next layer

Selection gate

Batch normalization (BN)

Interaction layer

Embedding layer

FIG. 4

500

Train data

S510: Enumerate and enter feature interaction items into an FM-based model

S520: Introduce architecture parameters to the FM-based model

S530: Perform optimization on the architecture parameters until convergence

S540: Perform feature interaction item deletion based on the optimized architecture parameters, to obtain a model through feature interaction item deletion

S550: Train the model obtained through feature interaction item deletion until convergence

Perform online inference on the model

FIG. 5

<u>600</u>

S610: Input data of a target object into a CRT prediction model or a CVR prediction model, to obtain a prediction result of a target object, where the CRT prediction model or the CVR prediction model is obtained through a method 300

S620: Determine a recommendation status of the target object based on the prediction result of the target object

FIG. 6

700

First processing unit 710

Second processing unit 720

Third processing unit 730

Training unit 740

FIG. 7

800

First processing unit 810

Second processing unit 820

FIG. 8

900

Processor 910

Data interface 930

Memory 920

FIG. 9

FIG. 10

## INTERNATIONAL SEARCH REPORT

| | International application No. |
|---|---|
| | **PCT/CN2021/077375** |

**A. CLASSIFICATION OF SUBJECT MATTER**

G06Q 30/02(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNABS, CNKI, SIPOABS, DWPI: 模型, 因子分解机, 参数, 特征, 组合, 优化, model, FM, parameter, feature, combine, optimize

**C. DOCUMENTS CONSIDERED TO BE RELEVANT**

| Category* | Citation of document, with indication, where appropriate, of the relevant passages | Relevant to claim No. |
|---|---|---|
| X | CN 108960293 A (WANKA HUANJU CULTURE MEDIA (BEIJING) CO., LTD.) 07 December 2018 (2018-12-07) description, paragraphs [0041]-[0064] | 1-20 |
| A | CN 109299976 A (SHENZHEN UNIVERSITY) 01 February 2019 (2019-02-01) entire document | 1-20 |
| A | CN 110490389 A (TENCENT TECHNOLOGY SHENZHEN CO., LTD.) 22 November 2019 (2019-11-22) entire document | 1-20 |
| A | WO 2016122787 A1 (QUALCOMM INCORPORATED) 04 August 2016 (2016-08-04) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 April 2021** | **07 May 2021** |

| Name and mailing address of the ISA/CN | Authorized officer |
|---|---|
| **China National Intellectual Property Administration (ISA/ CN) No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/077375**

| Patent document cited in search report | | | Publication date (day/month/year) | Patent family member(s) | | | Publication date (day/month/year) |
|---|---|---|---|---|---|---|---|
| CN | 108960293 | A | 07 December 2018 | CN | 108960293 | B | 05 February 2021 |
| CN | 109299976 | A | 01 February 2019 | WO | 2020047819 | A1 | 12 March 2020 |
| CN | 110490389 | A | 22 November 2019 | | None | | |
| WO | 2016122787 | A1 | 04 August 2016 | CN | 107209873 | A | 26 September 2017 |
| | | | | EP | 3251058 | A1 | 06 December 2017 |
| | | | | US | 2016224903 | A1 | 04 August 2016 |
| | | | | US | 10275719 | B2 | 30 April 2019 |

Form PCT/ISA/210 (patent family annex) (January 2015)

**REFERENCES CITED IN THE DESCRIPTION**

**Patent documents cited in the description**

- CN 202010202053